# EUROPEAN PATENT APPLICATION

(11) **EP 3 695 729 A1**
(43) Date of publication of application: **19.08.2020**
(21) Application number: 19157209.8
(22) Date of filing: 14.02.2019
(51) Int. Cl.: A23D 7/005, A23D 7/06, A23D 9/007, C11B 5/00

(54) **STABILIZED PUFA CONTAINING FAT COMPOSITIONS**

(71) Applicant: Vandemoortele Lipids NV, 9000 Gent (BE)
(72) Inventor: De Laporte, André, 8870 Izegem (BE); Waterbley, Ellen, 8870 Izegem (BE); Rimaux, Tom, 8870 Izegem (BE); Coudron, Joost, 8870 Izegem (BE); Lesaffer, Ans, 8870 Izegem (BE)
(74) Representative: De Clercq & Partners

(57) **Abstract**

The present invention provides new fat compositions comprising ubiquinol-stabilized polyunsaturated fatty acids for use in margarines, spreads, shortenings, edible oils, mayonnaises and dressings with improved oxidative stability.

## Description

### TECHNICAL FIELD

The present disclosure relates to the field of food production. More particularly, the disclosure relates to an improvement in oxidative stability of polyunsaturated fatty acid-containing edible fat-rich products such as margarines, spreads, shortenings, oils, mayonnaises and dressings. This improvement in oxidative stability is realized by adding ubiquinol to the oil/fat used to produce these polyunsaturated fatty acid-containing fat rich products. The invention also further relates to processes for producing such fat compositions and for the use thereof in edible food products.

### BACKGROUND OF THE INVENTION

Polyunsaturated fatty acids (PUFAs), such as the omega-3 and -6 series, are found in vegetable oils, fish (e.g. salmon, tuna, sardines, cod, and anchovy), algae and krill. Some PUFAs (linoleic and alpha-linolenic acid) are essential fatty acids and are required in various metabolic processes essential for maintaining good health but cannot be synthesized by humans, and therefore, must be obtained via the diet. Besides their nutritional role in the diet, omega-3 fatty acids can help to reduce the risk of a variety of diseases, including heart disease, cancer, arthritis, depression, and Alzheimer's disease, among others (Riediger et al., 2009). Therefore, the FAO/WHO give both a minimum recommended intake-level and acceptable range for total PUFA, i.e., 3% of total energy intake to prevent deficiency symptoms and between 6% and 11% of total energy intake for lowering total and LDL cholesterol and increasing HDL cholesterol. Within the food industry, there is an ongoing trend for incorporating polyunsaturated fatty acids in food products for their known health benefits. This is also true for fats, oils or blends to produce fat-rich products for use as oils, spreads, margarines, shortenings, mayonnaises and dressing. Thus, there is an increasing demand for products rich in polyunsaturated fatty acids.

Unfortunately, PUFAs are highly susceptible to oxidation by heat, air or light, which can lead to the development of unwanted (off-) taste and smell development of the food product in which they are incorporated. In addition, peroxides can be produced during said oxidation, which is believed to have adverse effects on human health. Currently, food industry is therefore continuously striving to offer nutritionally improved products while maintaining organoleptic and functional properties. In this sense, preventing lipid oxidation in high PUFA-content fat-based products and hence stabilizing the PUFAs has been the subject of many studies. A reduction of the access of oxygen may be obtained via production or storage in modified atmosphere (MAP). This strategy is usually difficult to apply in industry and its functionality is only present until opening. Alternatively, the use of micro-encapsulated oil could reduce the access of oxygen to the incorporated oil during storage. Also, this strategy limits the scope of applying such compositions in food products. Yet another way to limit lipid oxidation is via the use of antioxidants, which are capable of chelating metal ions or quenching the radicals that propagate the oxidation reaction. For example, water-soluble salts of ethylene diamine tetra-acetic acid (EDTA) or fat-soluble ascorbyl palmitate are chemical antioxidants known to be very effective in some products. However, the effect of antioxidants cannot be extrapolated from one product to another and must therefore be evaluated in each new case.

During the past two decades, intensive research has been undertaken on naturally occurring antioxidative compounds from different sources. The main drive for this quest of natural antioxidants is to reduce the use of synthetic compounds as food additives as a result of consumer demand. For example, European patent document EP3069615 discloses the use of an alternative natural antioxidant, namely water-soluble tea polyphenol as a means for blocking oxidation. Since this tea polyphenol is hardly soluble in oil, an emulsifier (polyglycerol-condensed ricinoleic acid ester (PGPR)) is needed, which stays in the oil/fat phase. According to the European additive legislation, PGPR is only allowed in W/O emulsion with a maximum of 40 % fat. According the current state of the art, there is still the need to find a natural antioxidant which has a positive effect on the oxidative stability of a PUFA containing oil, without the addition of an additive (such as an emulsifier) that can be applied to all fat containing products. Known natural antioxidants that are fat-soluble are for example natural vitamin E and rosemary extracts, but these seem to have less prominent antioxidant activity.

Coenzyme Q₁₀ (CoQ₁₀) is a fat-soluble substance ubiquitous in all cell membranes and lipoproteins and exists in both reduced and oxidized states, namely ubiquinol and ubiquinone, respectively. Over the past years, coenzyme Q₁₀ has been extensively studied for its health benefits. The primary biochemical action of coenzyme Q₁₀ is as a cofactor in the mitochondrial respiratory chain, in the series of redox reactions that are involved in the synthesis of adenosine triphosphate (ATP) via the Krebs cycle. As most cellular functions are dependent on an adequate supply of ATP, coenzyme Q₁₀ is essential for the health of virtually all human tissues and organs. Ubiquinone, the deprotonated form, becomes protonated (ubiquinol) at one side of the mitochondrial membrane and deprotonated at the other side of the mitochondrial membrane, thereby creating a proton pump, fueling the energy conversion. In the human body, coenzyme Q₁₀ will hence constantly fluctuate between its deprotonated (ubiquinone) and protonated (ubiquinol) state. Besides its function as an energy transfer molecule, coenzyme Q₁₀ is one of the most significant lipid antioxidants in human cells, which prevents the generation of free radicals and modifications of proteins, lipids, and DNA. In this way ubiquinol (the protonated form) can act as an antioxidant having beneficial effects on low-density-lipoprotein (LDL) cholesterol, one of the main causatives of cardiovascular diseases such as atherosclerosis, by preventing the LDL from oxidizing and becoming atherogenic. Coenzyme Q₁₀ deficiency is very rare because its level is well maintained primarily through endogenous biosynthesis. Nevertheless, its level declines gradually with age in a number of organs, such as the heart and the brain, probably ascribed to a combination of increased utilization and decreased biosynthesis. It is well known that dietary sources alone are inadequate to compensate the age-related deficiencies of coenzyme Q₁₀ in human bodies. For this reason, supplementing nutrition with ubiquinone or ubiquinol has therefore been suggested previously. Several studies have indeed shown that coenzyme Q₁₀ supplementation was beneficial to hypertension, dyslipidemia, and inflammation.

Recently, the company Kaneka Corp. discovered a method to stabilize the coenzyme in its reduced ubiquinol state as explained in European patent EP1474991 and added to fat containing foods, to suitably supply a source of ubiquinol to subjects. Said patent reports on the effect of the oil or fat on the stability of the ubiquinol added thereto, preventing it from being oxidized. No effect on the stability of the PUFAs in fat or oil products, i.e. reducing oxidation of PUFAs in such fat or oil products has been reported or suggested. Due to the complexity of fat or oil products, it remains uncertain to what extent antioxidants will influence the stability of the PUFAs in the end product as such.

In fact, in Nestlé's patent EP0424679, it was stated that unexpectedly the deprotonated form ubiquinone, and not the protonated form ubiquinol, was responsible for protecting food products from oxidation. In addition, the authors suggest adding lecithin and ascorbic acid in order to sustain said protection.

Lambelet et al., 1992 (J. Agric. Food Chem. Vol. 40, pp:584-584) indicated that there was no effect of ubiquinol on the stability of fatty acids in food products. They concluded that ubiquinol was not a food antioxidant and needs to be combined with a reducing agent such as vitamin C in order to have an antioxidant effect in food.

Accordingly, it is an object of the present invention to provide new fat compositions overcoming at least part of the above indicated problems of protecting PUFA containing fat compositions against oxidation.

### SUMMARY

Contrary to the reports on ubiquinol/ubiquinone cited above, the inventors have now surprisingly found that in fat compositions comprising PUFAs, more particularly long chain PUFAs, the latter can be prevented from being oxidized by adding a certain amount of ubiquinol to said PUFA comprising fat compositions. In contrast to what is stated in the patent of Nestle (EP0424679) discussed above, said effect was not obtained by the addition of ubiquinone.

During the shelf life of the fat composition or food product derived therefrom, the color of the fat composition shifts to a darker yellow color, indicating that the ubiquinol (off-white color) is actively transformed into its quinone form (yellow to orange color), i.e. is being oxidized. Without wanting to be bound by any particular theory, the ubiquinol possibly sequesters at least part of the oxidizing oxygen in the fat composition or food products derived therefrom, decreasing oxidation of the PUFAs therein.

The present invention relates to the following aspects:
Aspect 1: A method of stabilizing PUFAs in a fat composition comprising at least 5 wt. % PUFAs, preferably at least 10 wt. % PUFAs, more preferably at least 15 wt.% PUFAs, comprising the step of adding ubiquinol to said fat composition in an amount of at least 0,01 wt. % (100 ppm), preferably at least 0.04 wt.% (400 ppm), or at least 0.08 wt.% (800 ppm), such as between 0.01 and 1% by weight of said fat composition (between 100 and 10000 ppm). In preferred embodiments, said ubiquinol is present in an amount of between 0.02 and 0.5 wt. % (200 to 5000 ppm), more preferably between 0.03 and 0.3 wt. % (300 to 3000 ppm), between 0.04 and 0.25 wt. % (400 and 2500 ppm), between 0.04 and 0.2 wt.% (400 to 2000 ppm), between 0.08 and 0.2 wt.% (800 and 2000 ppm), or between 0.08 and 0.15 wt.% (800 to 1500 ppm).
Aspect 2: Use of ubiquinol for stabilizing PUFAs in a fat composition comprising at least 5 wt. % PUFAs, preferably at least 10 wt. % PUFAs, more preferably at least 15 wt.% PUFAs.
Aspect 3: The method or use according to aspects 1 or 2, wherein said PUFAs are selected from the group consisting of: omega-3 or omega-6 fatty acids.
Aspect 4. The method or use according to any one of aspects 1 to 3, wherein said PUFAs are omega-3 fatty acids having a chain length of 18 carbon atoms or more, such as those selected from the group consisting of: α-Linolenic acid (ALA), Hexadecatrienoic acid (HTA), Stearidonic acid (SDA), Eicosatrienoic acid (ETE), Eicosatetraenoic acid (ETA), Eicosapentaenoic acid (EPA), Heneicosapentaenoic acid (HPA), Docosapentaenoic acid (DPA), Clupanodonic acid, Docosahexaenoic acid (DHA), Tetracosapentaenoic acid, and Tetracosahexaenoic acid (Nisinic acid), or combinations thereof. Preferably, said PUFAs are long-chain omega-3 fatty acids having a chain length of 20 carbon atoms or more, such as those selected from the group consisting of: Docosahexaenoic acid (DHA) and Eicosapentaenoic acid (EPA).
Aspect 5. The method or use according to any one of aspects 1 to 3, wherein said PUFAs are omega-6 fatty acids, such as those selected from the group consisting of: Linoleic acid (LA), Gamma-linolenic acid (GLA), Calendic acid, Eicosadienoic acid, Dihomo-gamma-linolenic acid (DGLA), Arachidonic acid (AA, ARA), Docosadienoic acid, Adrenic acid, Osbond acid, Tetracosatetraenoic acid, and Tetracosapentaenoic acid, or combinations thereof.
Aspect 6. The method or use according to any one of aspects 1 to 5, wherein said PUFAs are derived from vegetable oil, an animal fat, a microorganism produced fat, a fish oil or the like, preferably from oils selected from: linseed, rapeseed, olive, palm, sunflower, soybean, algae, fish or krill, or combinations thereof.
Aspect 7. A stabilized PUFA-containing fat composition obtainable by the method or use of any one of aspects 1 to 6.
Aspect 8. A method for preparing a fat-rich food product comprising the steps of adding at least 10 wt.% of a PUFA-containing fat composition according to aspect 7 to said food product.
Aspect 9. The method according to aspect 8 further comprising the addition of, minerals and/or vitamins. Said vitamins are preferably selected from vitamin A, vitamin E, vitamin B1, vitamin B2, vitamin B6, vitamin B12, and vitamin D, more preferably vitamin E. Said minerals are preferably selected from selenium, zinc, calcium and iodine, more preferably selenium.
Aspect 10. The method according to claim 8 or 9 further adding any one or more of the following components: emulsifiers, preservatives, flavors, salt, acidifiers, colorants, thickening agents, stabilizers.
Aspect 11. A fat-rich food product obtained by the method of any one of claims 8 to 10, selected from the group comprising: margarines, spreads, shortenings, oils, mayonnaises and dressings, comprising a PUFA-containing fat composition, stabilized by the method or use of any one of aspects 1 to 6, or the composition according to aspect 7.
Aspect 12: A water-in-oil emulsion or oil-in-water emulsion comprising from 10 to 90% by weight of the fat composition according to aspect 7.
Aspect 13: A shortening comprising from 90-100 % by weight of the fat composition according to aspect 7.
Aspect 14: A liquid edible oil comprising the fat composition according to aspect 7.
Aspect 15. Use of a fat composition according to aspect 7 in the preparation of a fat-rich food product, preferably for the preparation of a water-in-oil emulsion (e.g. margarine, spread), oil-in-water emulsion (e.g. mayonnaise, dressing), a shortening or an edible oil.
Aspect 16. Use of ubiquinol for reducing off-taste due to oxidation of fatty acids in a fat composition according to any one of the aspects above or as defined herein.
Aspect 17. Use of the fat composition according to aspect 7, in the preparation of a food product, a food supplement, a pharmaceutical supplement, without generating an oxidized oil.
Aspect 18. The fat composition or food product according to any one of the above aspects, having an oxidation induction time of at least 1.2 times, such as at least 1.3 times that of the reference product not having ubiquinol added to its fat composition when tested using a rancimat test at a temperature of 120°C.

In all fat compositions of the above aspects, a P/S value can be determined wherein the ratio of the rancimat induction times of the reference product, i.e. without addition of ubiquinol or another antioxidant and that of the same product with ubiquinol or another antioxidant calculated as follows:
P = rancimat induction time of fat composition comprising ubiquinol or another antioxidant (in h)
S = rancimat induction time of fat composition not comprising ubiquinol or another antioxidant (in h)

Aspect 19. The fat composition or fat rich food product according to any one of the above aspects, wherein said ubiquinol is present in an amount of at least 0,01 wt.% (100 ppm), preferably at least 0.04 wt.% (400 ppm), or at least 0.08 wt.% (800 ppm), such as between 0.01 and 1% by weight of said fat composition (between 100 and 10000 ppm). In preferred embodiments, said ubiquinol is present in an amount of between 0.02 and 0.5 wt.% (200 to 5000 ppm), more preferably between 0.03 and 0.3 wt.% (300 to 3000 ppm), between 0.04 and 0.25 wt.% (400 and 2500 ppm), between 0.04 and 0.2 wt.% (400 to 2000 ppm), between 0.08 and 0.2 wt.% (800 and 2000 ppm), or between 0.08 and 0.15 wt.% (800 to 1500 ppm).

### BRIEF DESCRIPTION OF THE FIGURES

**Figure 1****:** Rancimat test analyzing the effect of ubiquinol on the oxidative stability of different PUFA-containing oils and fat blends, expressed in induction time.
**Figure 2****:** Rancimat test comparing the antioxidative effect of ubiquinone, rosemary extract, tocoN70 (a blend of natural tocopherols) and ascorbyl palmitate to ubiquinol in PUFA-containing oils, expressed in P/S values.
**Figure 3****:** PV measurements of lab-scale PUFA-containing fat spreads, as described in example 2.1, over time at 20°C.
**Figure 4****:** Color of the lab-scale PUFA-containing fat spreads, as described in example 2.1, over time at 20°C using the L*a*b color analysis.
**Figure 5****:** PV measurements of pilot-scale PUFA-containing fat spreads, as described in example 2.2, over time at 20°C.
**Figure 6****:** Color of the pilot-scale PUFA-containing fat spreads, as described in example 2.2, over time at 20°C using the L*a*b color analysis.

### DETAILED DESCRIPTION OF THE INVENTION

It is to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of" and "consisting essentially of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of and from the specified value, in particular variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Whereas the term "one or more", such as one or more members of a group of members, is clear per se, by means of further exemplification, the term encompasses inter alia a reference to any of said members, or to any two or more of said members, such as, e.g., any ≥3, ≥4, ≥5, ≥6 or ≥7 etc. of said members, and up to all said members.

All documents cited in the present specification are hereby incorporated by reference in their entirety.

Unless otherwise specified, all terms used in disclosing the invention, including technical and scientific terms, have the meaning as commonly understood by the person skilled in the art to which this invention belongs. By means of further guidance, term definitions may be included to better appreciate the teaching of the present invention.

The term "ubiquinol" as used herein as an additive to the fat compositions or food products refers to the protonated form of coenzyme Q₁₀ (CoQ₁₀). The term is meant to exclude the deprotonated or quinone form called ubiquinone. Ubiquinol can be obtained commercially for example from Kaneka Corp. (JP) and can optionally be in its stabilized form called "P30", also available from Kaneka Corp. which has been stabilized against oxidation when exposed to air. As used herein, the ubiquinol component can comprise a minor amount of ubiquinone. In general, the ratio of ubiquinol vs ubiquinone needs to be at least 4/1, at least 5/1, at least 6/1, at least 7/1, at least 8/1, at least 9/1, at least 10/1, at least 11/1, at least 12/1, at least 13/1, at least 14/1, at least 15/1, at least 20/1, or at least 25/1. In general, the ubiquinol composition comprises less than 20 wt. % ubiquinone on the total ubiquinol component, preferably less than 15 wt.% ubiquinone, such as less than 12 wt.% ubiquinone, more preferably 10 % wt. or less than 10 wt.% ubiquinone on the total ubiquinol component. In the most preferred embodiment the ubiquinol composition comprises less than 5 wt. % ubiquinone on the total ubiquinol component.

The term "SAFA" stands for saturated fatty acids, i.e. fatty acids in which the side chains have all single carbon-carbon bonds.

The term "PUFA" stands for poly unsaturated fatty acids, i.e. fatty acids of which the side chain has at least two double carbon bonds. Exemplary PUFAs are omega-3 or omega-6 fatty acids, respectively having a double bond on position 3 and 6 of the fatty acid chain. Well known examples of both types are shown in the tables below:

**OMEGA-3 FATTY ACIDS:**

| **Common name** | **Lipid name** |
|---|---|
| Hexadecatrienoic acid (HTA) | 16:3 (*n*-3) |
| α-Linolenic acid (ALA) | 18:3 (*n*-3) |
| Stearidonic acid (SDA) | 18:4 (*n*-3) |
| Eicosatrienoic acid (ETE) | 20:3 (*n*-3) |
| Eicosatetraenoic acid (ETA) | 20:4 (*n*-3) |
| Eicosapentaenoic acid (EPA) | 20:5 (*n*-3) |
| Heneicosapentaenoic acid (HPA) | 21:5 (*n*-3) |
| Docosapentaenoic acid (DPA), Clupanodonic acid | 22:5 (*n*-3) |
| Docosahexaenoic acid (DHA) | 22:6 (*n*-3) |
| Tetracosapentaenoic acid | 24:5 (*n*-3) |
| Tetracosahexaenoic acid (Nisinic acid) | 24:6 (*n*-3) |

**OMEGA-6 FATTY ACIDS:**

| **Common name** | **Lipid name** |
|---|---|
| Linoleic acid (LA) | 18:2 (*n*-6) |
| Gamma-linolenic acid (GLA) | 18:3 (*n*-6) |
| Calendic acid | 18:3 (*n*-6) |
| Eicosadienoic acid | 20:2 (*n*-6) |
| Dihomo-gamma-linolenic acid (DGLA) | 20:3 (*n*-6) |
| Arachidonic acid (AA, ARA) | 20:4 (*n*-6) |
| Docosadienoic acid | 22:2 (*n*-6) |
| Adrenic acid | 22:4 (*n*-6) |
| Osbond acid | 22:5 (*n*-6) |
| Tetracosatetraenoic acid | 24:4 (*n*-6) |
| Tetracosapentaenoic acid | 24:5 (*n*-6) |

The term "vegetable oil" as used herein generally refers to triglycerides extracted from plants. The term "vegetable oil" is more preferably defined as referring to plant oils that are liquid at room temperature. Examples of vegetable oils that are preferably used in the blends as defined herein are those comprising at least 5 wt.% PUFAs such as: linseed oil, rapeseed oil, olive oil, palm oil, sunflower oil, soybean oil, algae oil and fractions or interesterifications thereof. In some embodiments said oils have not been chemically modified.

The term "animal fat" as used herein generally refers to fat derived from animals and can for example be marine or fish oil, krill oil, butterfat, etc.

The term "fat composition" as used herein generally refers to a composition comprising at least one fat or oil. Typically, when used herein, said mixture will comprise a liquid or solid vegetable or animal oil or fat.

The term "fat-rich food product" encompasses all fat products comprising at least 10 wt.% fat and/or oil based on the total weight of the food composition.

Examples of fat-rich food products are water-in-oil emulsions or oil-in-water emulsions comprising from 10 to 90% by weight fat, shortenings comprising from 90-100 % by weight of fat, or liquid edible oils.

More specific examples are margarines comprising from 80 to 90 % by weight of fat; minarines or halvarines comprising from 39 to 41 % by weight of fat; a ¾ margarine comprising from 60-62 % by weight of fat; shortenings comprising from 90-100 % by weight of fat; spreads comprising from 62-80 % by weight of fat; reduced fat spreads comprising from 41-60% by weight of fat; or low fat spreads comprising from 10-39% by weight of fat. The term "oil" as used herein refers to a vegetable or animal oil, having minimum 5% PUFA. Some examples are fish oil (e.g. from sardines, salmon, tuna), rapeseed oil, linseed oil, soybean oil, walnut oil, canola oil, sunflower oil, sesame oil, chia oil, peanut oil or butter, safflower oil, oil obtained from seaweed or combinations thereof.

Fat-rich food products according to the invention can further comprise one or more of coloring agents (e.g. beta carotene), salt, flavors, acidifiers (e.g. citric acid), thickeners, stabilizers, preservatives (e.g. sorbic acid or benzoic acid or their salts such as potassium sorbate), or antioxidants such as tocopherols, and emulsifiers (e.g. citric acid esters of mono- and diglycerides of fatty acids, lecithin, mono- and diglycerides of fatty acids or polyglycerol esters). Typically, these components are present in an amount of less than 5% by weight of the fat composition, such as for example from 0.1 to 3%, or from 0.1 to 2%. The preparation of shortenings or margarines comprising a fat component such as the fat continuous food product according to the invention and an aqueous phase is well known in the art. Said additional ingredients can be added into the aqueous phase or into the fat phase.

A process of making a fat composition as defined herein comprises the steps of mixing the fat ingredients and the desired amount of ubiquinol.

The fat composition as defined herein can be used as/in oils, spreads, shortenings, mayonnaises, dressings or margarines.

In one embodiment, the margarine or shortening as defined herein can be used in the processing or production of dough products. With the term "dough product" is meant a product made based on dough. The term "dough" is not to be construed as limited in any way, and may refer to any kind of dough, including Danish or puff pastry dough, viennoiserie dough, biscuit dough, bread dough, short crust dough, sandwich bread dough, multi-grain dough, pizza dough, doughnut dough, tarts, brownie dough, muffin dough, or the like. Typically, the fat continuous food products defined herein can be used as a laminating fat blend, for use in laminated dough products, e.g. puff pastry dough products such as viennoiserie, rolls, croissants, etc.

The present invention is further illustrated in the following non-limiting examples.

### EXAMPLES

### 1. Preparation of oil and fat blends for rancimat analysis

The effectiveness of ubiquinol or ubiquinone as an antioxidant was assessed by measuring the rancimat induction time of different oils and fat blends containing different concentrations of ubiquinol or ubiquinone. Comparison was made with references containing no ubiquinol or ubiquinone. The effectiveness of ubiquinol or ubiquinone was also compared to the effectiveness of other antioxidants, such as rosemary extract, a blend of natural tocopherols (Guardian tocoN70 IP refined (Danisco)) and ascorbyl palmitate.

The samples were prepared according to the following steps:
1. The oils/fats are weighed and where appropriate blended together
2. The oils/fat blends are heated to approximately 45°C on a magnetic stirrer plate
3. The antioxidant is added to the hot oil/fat blend while continuously stirring for about 5 minutes

The oils and fat blends tested all contain at least 20 wt.% PUFAs:

| | **26% palm oil + 74% rapeseed oil** | **25% palm oil + 72% rapeseed oil + 3% fish oil** | **Rapeseed oil** | **Sunflower oil** | **Soybean oil** |
|---|---|---|---|---|---|
| **SAFA%** | 23.2 | 23.3 | 8.1 | 11.0 | 14.6 |
| **MUFA%** | 54.3 | 53.2 | 63.9 | 28.7 | 28.8 |
| **PUFA%** | 22.6 | 23.1 | 28.0 | 60.3 | 56.5 |
| **omega 3%** | 6.0 | 5.8 | 8.0 | 0.3 | 5.7 |
| **long chain omega 3%** | - | 0.8 | - | - | - |
| **C20.5 (w3)%** | - | 0.3 | - | - | - |
| **C22.6 (w3)%** | - | 0.4 | - | - | - |

### 2. Preparation of lab-scale and pilot-scale fat spreads

### 2.1. Lab-scale

As a reference, a fat spread (water-in-oil emulsion) containing a significant amount of PUFAs (23%) was prepared using the following recipe:

| Fat composition rich in PUFAs: | |
|---|---|
| • Palm oil | 20.0% |
| • Rapeseed oil | 57.5% |
| • Fish oil | 2.5% |
| Sunflower lecithin: | 0.100% |
| Colorant: | 0.001% |
| Flavors: | 0.040% |
| Rosemary extract: | 0.080% |
| Vitamin mix (A, D, E): | 0.022% |
| Citric acid: | 0.008% |
| Mineral mix and salts: | 1.725% |
| Potassium sorbate: | 0.088% |
| Water: | to 100% |

The effectiveness of ubiquinol or ubiquinone as an antioxidant was assessed by comparing the oxidation rate of this reference recipe to the same recipe as described above to which 1000 ppm ubiquinone (comprising not less than 98% ubiquinone from Kaneka Corp) or 1000 ppm ubiquinol (comprising not less than 96% ubiquinol from Kaneka Corp) was added.

Lab-scale fat spreads were prepared using the following general protocol:
1. The oils/fats are weighed and blended together and lecithin (emulsifier) is added at a temperature of about 55°C. This blend is mixed at a speed of about 450 rpm, using e.g. an agitator.
2. Where appropriate, ubiquinol, ubiquinone and other fat-soluble ingredients were added and blended into the fat blend.
3. From said fat blend, a sample is taken for immediate PV measurement (at time 0).
4. To the fat blend, an amount of aqueous phase containing all water-soluble ingredients is slowly added at about 55°C. The resulting water-in-oil emulsion is then mixed at 500 rpm (agitator) for about 1 minute.
5. The resulting emulsion is then cooled in a 0.4 liter double walled mixing vessel (with a cooling water temperature of 5°C) while continuously stirring for about 10 minutes. The final emulsion reached a temperature of about 12°C.
6. Samples of 30 to 40g of the emulsion were weighed and stored at 10°C for about 2 days. After 2 days of stabilization at 10°C, the samples were subsequently stored at different storage temperatures (5°C, 10°C or 20°C) to assess the oxidative stability upon storage.

### 2.2. Pilot-scale

Spreads of the invention may be prepared by any suitable method for the preparation of water-in-oil spread products. A preferred method however involves the mixing of all ingredients, optionally followed by a pasteurization and homogenization, followed by cooling in one or more scraped surface heat exchangers (A-units), optionally followed by processing through one or more crystallizer units (C-units). The production process for margarines and spreads well known by the person skilled in the art is described in Margarine by Andersen & Williams, Pergamon Press 1965.

The same recipes as described in the lab-scale trials were produced on such a Votator process and comprised the following steps:
1. The fats and oils were melted at approximately 55 °C
2. All fat-soluble ingredients were dissolved in oil at approximately 70 °C
3. The melted fat-soluble ingredients were added to the liquid fat phase
4. A water phase was prepared with all the water-soluble ingredients
5. The water phase was dosed slowly to the liquid fat phase upon continuous stirring making a water-in-oil emulsion
6. The emulsion is finally cooled through a series of scraped surface heat exchangers to a temperature of 6°C and subsequently further crystallized in an uncooled stirred crystallizer unit.

### MEASUREMENTS

### 1. Rancimat analysis

The rancimat accelerated oxidation method (AOCS Cd 12b-92; ISO 6886; or 2.4.28.2-93 Fat stability test on Autoxidation, CDM, Japan) is performed by measuring the conductivity of volatile compounds that are formed during fatty acid oxidation. The test makes use of an air stream which is passed through the sample of fat or oil at an elevated temperature (50-220°C) in order to accelerate oxidation. This heated air stream causes the oxidation of the fat molecules resulting in volatile organic compounds and other products, which are transferred to a measuring vessel and absorbed into a measuring solution (usually distilled water), of which the conductivity is continuously recorded. The increase of conductivity reflects an increase in the amount of volatile organic acids and thus of total oxidation degree. The time that passes until appearance of these oxidation reaction by-products (via conductivity measurement) is called the "induction time" or "induction period" and is a measure for oxidative stability of oils or fats.

The following settings were applied on a Metrohm 892 rancimat testing machine:
- Measurement temperature: 120°C
- Air flow: 20 l/h
- Total amount of fat sample: 3 g

As a measure of the effect of ubiquinol or another antioxidant on stabilization of the PUFAs within fat spreads or within oils or fats containing PUFAs, the ratio between the rancimat induction time (in h) of the fat component without ubiquinol or another antioxidant being added (S) and that of the same fat composition to which a certain amount of ubiquinol or another antioxidant has been added (P) can be calculated:
P/S, wherein
P = rancimat induction time of fat composition comprising ubiquinol or another antioxidant (in h)
S = rancimat induction time of fat composition not comprising ubiquinol or another antioxidant (in h)

All P/S values above 1 are indicative of a positive effect on oxidation stability.

### 2. Peroxide value (PV) measurements

Lipid oxidation involves the continuous formation of hydroperoxides as primary oxidation products that may break down to a variety of nonvolatile and volatile secondary products. The peroxide value is therefore a generally accepted indicator for measuring the primary oxidation products. The fat or oil is dissolved in an iso-octane/acetic acid (2/3 vol/vol% mixture) mixture and subjected to an excess of iodide via a saturated solution of potassium iodide. The peroxides present in the fat phase will oxidize the iodide to iodine which is then titrated to a colorimetric endpoint using sodium thiosulfate with starch as an indicator. The amount of iodine produced is directly proportional to the peroxide value. The result of PV is calculated in milliequivalents oxygen per kg of fat (meq/kg). The method used is based on the AOCS Cd 8b-90 method. All analysis on water-in-oil emulsions were done on the fat phase of the spreads which was separated via centrifugation.

### 3. Color test

For measuring reflective colors of the surface of the spreads, a Minolta Chroma meter CR-200 was used. With this technique values for three variables can be obtained: L* (brightness), A* and b* (color components). The meter is a compact tristimulus color analyzer that uses diffuse illumination and 0° viewing angle to take accurate color measurement.

A pulsed xenon arc lamp provides a diffuse and even illumination over the sample surface. Six silicon photocells are used to measure both incident and reflected light.

Absolute measurements are taken in L*a*b values (CIE 1976).

CIE Illuminant D₆₅ lighting conditions are used.

### 4. Sensory analysis

Blind tasting of the fat spreads is performed by 10 panelists and rated according to the following scale:
4= no off-taste
3 = very limited off-taste
2 = pronounced off-taste
1 = extreme off-taste

Each panelist evaluates the coded samples individually and in a random order. The average score of each spread is calculated and judged as acceptable if ≥ 3.

The taste of the spreads is assessed at multiple moments during shelf life (fresh, after 4 weeks, 8 weeks and 14 weeks) and at different storage temperatures (5°C, 10°C and 20°C).

### RESULTS

### 1. Influence of ubiquinol and ubiquinone on oxidation of oils and fat blends rich in PUFAs

### 1.1. Rancimat test analyzing the effect of ubiquinol on the oxidative stability of different PUFA containing oils and fat blends

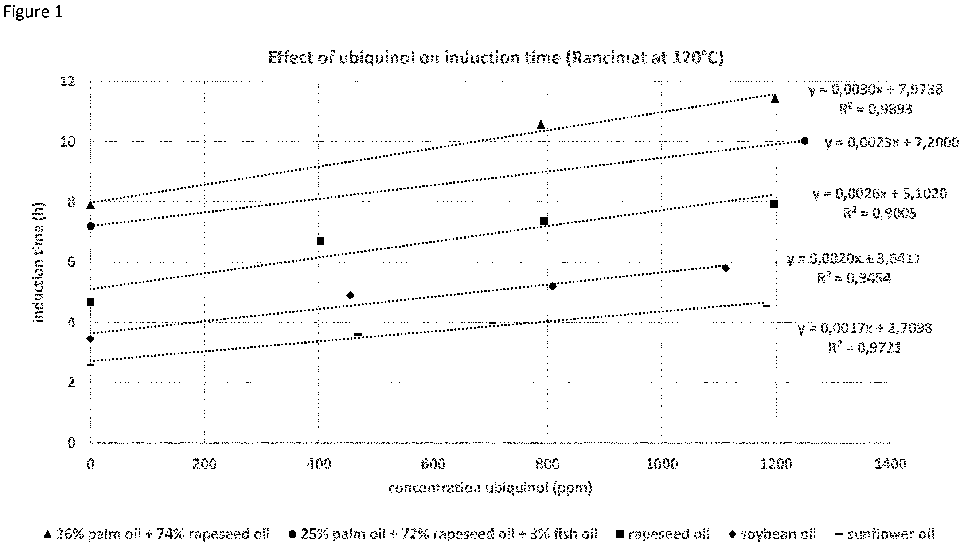

The effect of ubiquinol on the oxidative stability was tested in different PUFA containing oils and fat blends, as described in example 1. Exemplary results are included in the table below. The rancimat test is showing a clear shift (delay) in the oxidative instability when adding ubiquinol. Moreover, a clear correlation between the amount of ubiquinol added and the oxidation induction time was seen for all compositions tested, following a comparable slope (Cf. Figure 1). This indicates that the effect of ubiquinol on delaying PUFA oxidation is not limited to a particular type of fat or oil.

### 1.2. Comparison of antioxidative effect of ubiquinol to other commercial antioxidants via rancimat on different PUFA containing oils

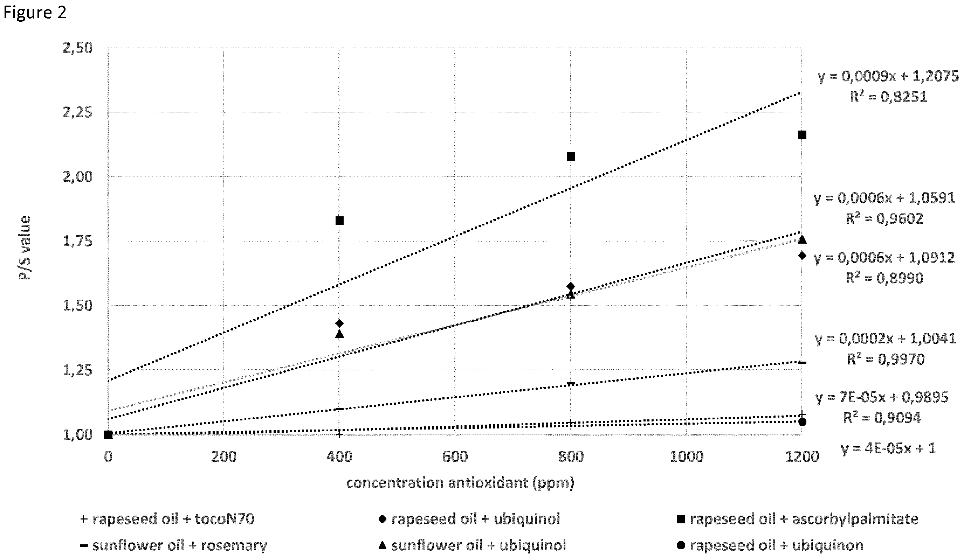

The effect of ubiquinol in PUFA containing oils (Cf. Example 1 for PUFA content) was compared to that of ubiquinone, a blend of natural tocopherols (Guardian tocoN70 IP refined (Danisco)), rosemary extract and ascorbyl palmitate (Cf. Figure 2). Exemplary results are included in the table below.

The results are showing a clear delay in the oxidation instability when adding ubiquinol, with a slope that is steeper than that of ubiquinone, rosemary extract and tocoN70, indicating a higher antioxidant effect on the PUFAs in the oil.

From this test, ubiquinol outperforms all tested antioxidants except for ascorbyl palmitate, which is a very strong synthetical antioxidant food additive. Contrary to ubiquinol, ubiquinone doesn't delay the induction time, meaning that there is no effect of ubiquinone on the oxidative stability.

**Table 1: Rancimat induction times (h) and P/S values of different oils and fats with varying concentrations of antioxidants measured at 120°C**

| | **Induction time (h)** | | | | | **P/S value** | | | | |
|---|---|---|---|---|---|---|---|---|---|---|
| **Antioxidant added/ppm** | **0** | **400** | **800** | **1200** | **1250** | **0** | **400** | **800** | **1200** | **1250** |
| **Rapeseed oil** | | | | | | | | | | |
| tocoN70 | 6.41 | 6.42 | 6.70 | 6.91 | - | 1.00 | 1.00 | 1.05 | 1.08 | - |
| Ubiquinol | 4.68 | 6.70 | 7.37 | 7.93 | - | 1.00 | 1.43 | 1.57 | 1.69 | - |
| ubiquinone | 4.00 | - | - | 4.20 | - | 1.00 | - | - | 1.05 | - |
| ascorbyl palmitate | 6.01 | 11.00 | 12.50 | 13.00 | - | 1.00 | 1.83 | 2.08 | 2.16 | - |

| **Sunflower oil** | | | | | | | | | | |
|---|---|---|---|---|---|---|---|---|---|---|
| rosemary extract | 2.41 | 2.65 | 2.89 | 3.08 | - | 1.00 | 1.10 | 1.20 | 1.28 | - |
| Ubiquinol | 2.59 | 3.60 | 4.00 | 4.55 | - | 1.00 | 1.39 | 1.54 | 1.76 | - |

| **Soybean oil** | | | | | | | | | | |
|---|---|---|---|---|---|---|---|---|---|---|
| Ubiquinol | 3.46 | 4.90 | 5.20 | 5.80 | - | 1.00 | 1.42 | 1.50 | 1.68 | - |

| **26% palm, 74% rapeseed oil** | | | | | | | | | | |
|---|---|---|---|---|---|---|---|---|---|---|
| Ubiquinol | 7.90 | - | 10.56 | 11.43 | - | 1.00 | - | 1.34 | 1.45 | - |

| **25% palm, 72% rapeseed oil, 3% fish oil** | | | | | | | | | | |
|---|---|---|---|---|---|---|---|---|---|---|
| Ubiquinol | 7.20 | - | - | - | 10.00 | 1.00 | - | - | - | 1.39 |

From said values it is clear that the ratio P/S of all ubiquinol containing fat compositions is at least 1.2 and in certain cases even up to 1.7, indicating a 70% percent increase in oxidation stability over the measured time period at said rancimat conditions.

### 2. Studying the effect of ubiquinol and ubiquinone on oxidation of PUFAs in lab-scale fat spreads

Although the rancimat assay is a widely accepted and applied test for measuring antioxidant effect of different oils and fats, it remains an accelerated test (usually at higher temperatures). Such tests are often highly relevant to the conditions to which oils and fats are subjected as in production processing, food manufacture or domestic use, but it might not be predictive for the oxidative stability in a real food matrix. To assess the impact of ubiquinol during the shelf life of fat spreads, the oxidative stability of lab-scale fat spreads, according to Example 2.1, with ubiquinone or ubiquinol were compared to fat spreads without ubiquinone/ubiquinol as a function of time at 20°C. Both peroxide value (measurement of primary oxidation) and discoloration (indication of degree of conversion of ubiquinol to ubiquinone via L*a*b measurement) were evaluated as a function of time.

### 2.1. PV analysis in lab-scale PUFA containing spread over time at 20°C

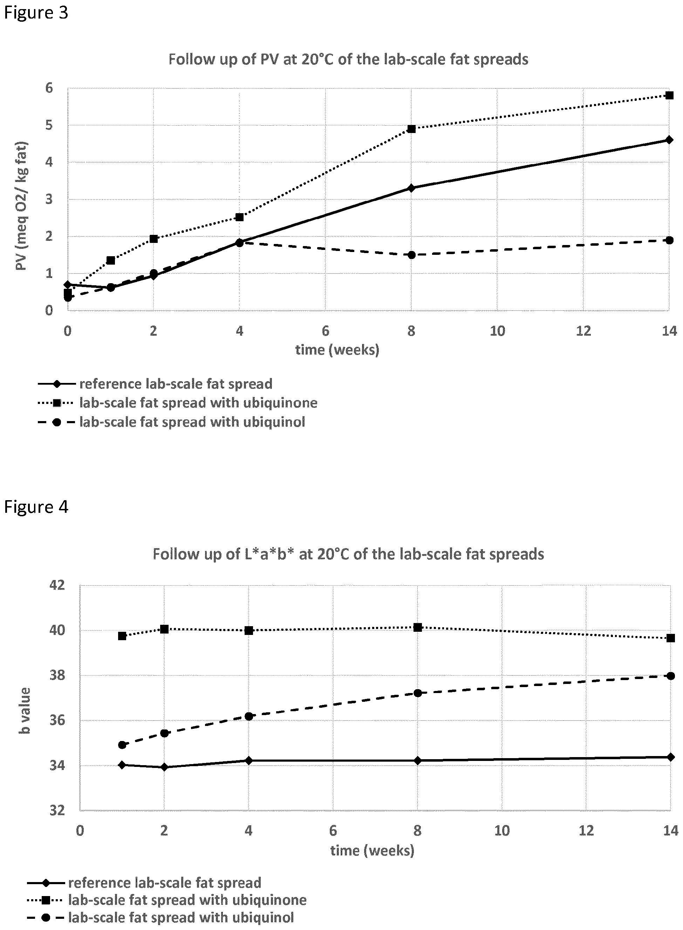

PV measurement at 20°C of lab-scale fat spreads according to Example 2.1. A clear difference is seen in PV from 8 weeks onwards, which is remarkedly lower in the spread comprising ubiquinol, but not in the spread comprising ubiquinone (Cf. Figure 3).

### 2.2. Color of the lab-scale PUFA containing fat spreads over time at 20°C using the L*a*b color analysis

The color of the PUFA containing lab-scale fat spreads as defined in Example 2.1 was analyzed over time at 20°C, using the L*a*b analysis. The CIELAB color space (also known as CIE L*a*b* or sometimes abbreviated as simply "Lab" color space) expresses color as three numerical values, L* for the lightness and a* and b* for the green-red and blue-yellow color components. Both the L* and a* values remain constant over time and are similar for all samples (72.0 ± 0.7 and -8.8 ± 0.2 respectively). However, the b* value is different depending on the recipe. Adding ubiquinol (off-white color) to the reference lab-scale fat spread has no effect on the b* component when measuring a fresh sample. In contrast, adding ubiquinone (yellow to orange color) immediately gives a darker yellow color to the lab-scale fat spread, which is translated into a higher b* value. Upon storage at 20°C, a clear increase of the b* component of the lab-scale fat spread containing ubiquinol is observed, showing a discoloration of the spread towards a darker yellow color, more in line with the fat spread containing ubiquinone. A visible discoloration can be observed from 4 weeks onwards. This shift in the color space indicates that the ubiquinol (off-white color) is transformed into ubiquinone (yellow to orange color) (Cf. Figure 4).

### 3. Studying the effect of ubiquinol and ubiquinone on oxidation of PUFAs in pilot-scale fat spreads

To further assess the impact of ubiquinol in fat spreads produced under relevant processing conditions (rework, pasteurization, shear, etc.), pilot-scale samples were made according to Example 2.2. Both peroxide value (measurement of primary oxidation) and discoloration (indication of degree of conversion of ubiquinol to ubiquinone via L*a*b measurement) were evaluated as a function of time.

### 3.1 PV analysis in pilot-scale PUFA containing fat spreads over time at 20°C

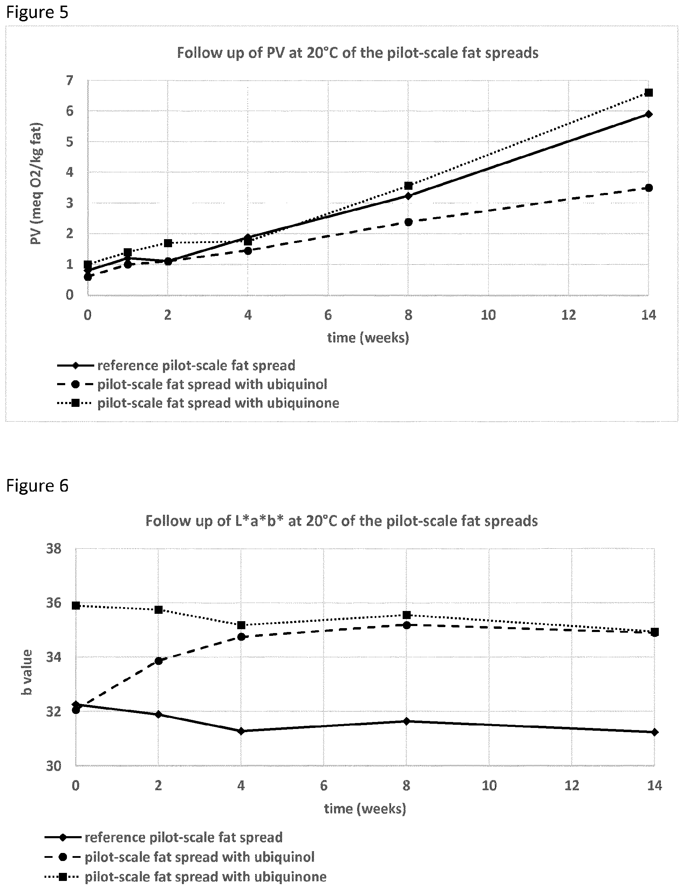

PV analysis on pilot-scale fat spreads as defined in Example 2.2. A clear difference is seen in PV at 14 weeks, which is remarkedly lower in the spread comprising ubiquinol, but not in the spread comprising ubiquinone (Cf. Figure 5).

### 3.2 Color of the pilot-scale PUFA containing fat spreads over time at 20°C using the L*a*b color analysis

The color of the PUFA containing pilot-scale fat spreads as defined in Example 2.2 was analyzed over time at 20°C, using the L*a*b analysis. The color is expressed as three numerical values: L* for the lightness, a* for the green-red color components and b* for the blue-yellow color components. Similar to the lab-scale fat spreads, both the L* and a* values remain constant over time and are similar for all samples (87.9 ± 2.3 and -8.1 ± 0.3 respectively). The b* value is again different depending on the recipe. Adding ubiquinol (off-white color) to the reference pilot-scale fat spread has no effect on the b* component when measuring a fresh sample. In contrast, adding ubiquinone (yellow to orange color) immediately gives a darker yellow color to the pilot-scale fat spread, which is translated into a higher b* value. Upon storage at 20°C, a clear increase of the b* component of the pilot-scale fat spread containing ubiquinol is observed, showing a discoloration of the spread towards a darker yellow color, more in line with the fat spread containing ubiquinone. A visible discoloration can be observed from 2 weeks onwards. This shift in the color space indicates that the ubiquinol (off-white color) is transformed into ubiquinone (yellow to orange color) (Cf. Figure 6).

## Claims

1. A method of stabilizing polyunsaturated fatty acids (PUFAs) in a fat composition comprising at least 5 wt.% PUFAs, comprising the step of adding ubiquinol to said fat composition in an amount of at least 0.01 % by weight of said fat composition.

2. Use of ubiquinol for stabilizing PUFAs in a fat composition comprising at least 5 wt.% PUFAs.

3. The method or use according to claim 1 or 2, wherein said PUFAs are selected from the group consisting of: omega-3 or omega-6 fatty acids.

4. The method or use according to any one of claims 1 to 3, wherein said PUFAs are omega-3 fatty acids having a chain length of 18 carbon atoms or more, such as those selected from the group consisting of: α-Linolenic acid (ALA), Hexadecatrienoic acid (HTA), Stearidonic acid (SDA), Eicosatrienoic acid (ETE), Eicosatetraenoic acid (ETA), Eicosapentaenoic acid (EPA), Heneicosapentaenoic acid (HPA), Docosapentaenoic acid (DPA), Clupanodonic acid, Docosahexaenoic acid (DHA), Tetracosapentaenoic acid, and Tetracosahexaenoic acid (Nisinic acid), or combinations thereof. Preferably, said PUFAs are long-chain omega-3 fatty acids having a chain length of 20 carbon atoms or more, such as those selected from the group consisting of: Docosahexaenoic acid (DHA) and Eicosapentaenoic acid (EPA).

5. The method or use according to any one of claims 1 to 3, wherein said PUFAs are omega-6 fatty acids, such as those selected from the group consisting of: Linoleic acid (LA), Gamma-linolenic acid (GLA), Calendic acid, Eicosadienoic acid, Dihomo-gamma-linolenic acid (DGLA), Arachidonic acid (AA, ARA), Docosadienoic acid, Adrenic acid, Osbond acid, Tetracosatetraenoic acid, and Tetracosapentaenoic acid, or combinations thereof.

6. The method or use according to any one of claims 1 to 5, wherein said PUFAs are derived from vegetable oil, an animal fat, a microorganism produced fat, a fish oil or the like, preferably from oils selected from: linseed, rapeseed, olive, palm, sunflower, soybean, algae, fish or krill, or combinations thereof.

7. A stabilized PUFA-containing fat composition obtainable by the method or use of any one of claims 1 to 6.

8. A method for preparing a fat-rich food product comprising the steps of adding at least 10 wt.% of a PUFA-containing fat composition according to claim 7 to said food product.

9. The method according to claim 8 further comprising the addition of minerals and/or vitamins.

10. The method according to claim 8 or 9 further adding any one or more of the following components: emulsifiers, preservatives, flavors, salt, acidifiers, colorants, thickening agents, or stabilizers.

11. A fat-rich food product obtained by the method of any one of claims 8 to 10, selected from the group comprising: margarines, spreads, shortenings, oils, mayonnaises and dressings, comprising a PUFA-containing fat composition, stabilized by the method or use of any one of claims 1 to 6, or according to claim 7.

12. Use of a fat composition according to claim 7 in the preparation of a food product, preferably for the preparation of a food product selected from the group comprising: margarines, spreads, shortenings, oils, mayonnaises and dressings.

13. The fat composition according to claim 7, having a P/S value of at least 1.2, preferably at least 1.3 or higher such as 1.4 or higher, wherein said P/S value is calculated as follows:
P = rancimat induction time of fat composition comprising ubiquinol or another antioxidant (in h)
S = rancimat induction time of fat composition not comprising ubiquinol or another antioxidant (in h)

14. Use of ubiquinol for reducing off-taste due to oxidation of fatty acids in a fat composition according to any one of the claims above.

15. Use of the fat composition according to claim 7, in the preparation of a food product, a food supplement, a pharmaceutical supplement, without generating an oxidized oil.

16. The fat composition according to claim 7 wherein said ubiquinol is present in an amount of at least 100 ppm.

## Amended claims

### Amended claims in accordance with Rule 137(2) EPC.

1. A method of improving the oxidative stability of polyunsaturated fatty acids (PUFAs) in a fat composition comprising at least 5 wt.% PUFAs, comprising the step of adding ubiquinol to said fat composition in an amount of at least 0.01 % by weight of said fat composition.

2. The method or use according to claim 1, wherein said PUFAs are selected from the group consisting of: omega-3 or omega-6 fatty acids.

3. The method or use according to claim 1 or 2, wherein said PUFAs are omega-3 fatty acids having a chain length of 18 carbon atoms or more, such as those selected from the group consisting of: α-Linolenic acid (ALA), Hexadecatrienoic acid (HTA), Stearidonic acid (SDA), Eicosatrienoic acid (ETE), Eicosatetraenoic acid (ETA), Eicosapentaenoic acid (EPA), Heneicosapentaenoic acid (HPA), Docosapentaenoic acid (DPA), Clupanodonic acid, Docosahexaenoic acid (DHA), Tetracosapentaenoic acid, and Tetracosahexaenoic acid (Nisinic acid), or combinations thereof. Preferably, said PUFAs are long-chain omega-3 fatty acids having a chain length of 20 carbon atoms or more, such as those selected from the group consisting of: Docosahexaenoic acid (DHA) and Eicosapentaenoic acid (EPA).

4. The method or use according to claim 1 or 2, wherein said PUFAs are omega-6 fatty acids, such as those selected from the group consisting of: Linoleic acid (LA), Gamma-linolenic acid (GLA), Calendic acid, Eicosadienoic acid, Dihomo-gamma-linolenic acid (DGLA), Arachidonic acid (AA, ARA), Docosadienoic acid, Adrenic acid, Osbond acid, Tetracosatetraenoic acid, and Tetracosapentaenoic acid, or combinations thereof.

5. The method or use according to any one of claims 1 to 4, wherein said PUFAs are derived from vegetable oil, an animal fat, a microorganism produced fat, a fish oil or the like, preferably from oils selected from: linseed, rapeseed, olive, palm, sunflower, soybean, algae, fish or krill, or combinations thereof.

6. A stabilized PUFA-containing fat composition obtainable by the method or use of any one of claims 1 to 5.

7. The fat composition according to claim 6 wherein said ubiquinol is present in an amount of at least 100 ppm.

8. The fat composition according to claim 6, having a P/S value of at least 1.2, preferably at least 1.3 or higher such as 1.4 or higher, wherein said P/S value is calculated as follows:
P = rancimat induction time of fat composition comprising ubiquinol or another antioxidant (in h)
S = rancimat induction time of fat composition not comprising ubiquinol or another antioxidant (in h)

9. A method for preparing a fat-rich food product comprising the steps of adding at least 10 wt.% of a PUFA-containing fat composition according to any one of claims 6 to 8 to said food product.

10. The method according to claim 9 further comprising the addition of minerals and/or vitamins.

11. The method according to claim 9 or 10 further adding any one or more of the following components: emulsifiers, preservatives, flavors, salt, acidifiers, colorants, thickening agents, or stabilizers.

12. A fat-rich food product selected from the group comprising: margarines, spreads, shortenings, oils, mayonnaises and dressings, or a food supplement or a pharmaceutical supplement, comprising a PUFA-containing fat composition according to any one of claims 6 to 8.

13. The method according to claim 1, further comprising reducing off-taste due to oxidation of fatty acids in a fat composition.
